# EUROPÄISCHE PATENTSCHRIFT

(11) **EP 3 704 009 B1**
(45) Veröffentlichungstag und Bekanntmachung des Hinweises auf die Patenterteilung: **01.12.2021**
(21) Anmeldenummer: 19787179.1
(22) Anmeldetag: 09.10.2019
(51) Int. Cl.: B62K 27/00, B60N 2/28

(54) **FAHRRADANHÄNGER ZUM TRANSPORT VON PERSONEN MIT MINDESTENS EINER SITZVORRICHTUNG UND EINEM GURT-RÜCKHALTESYSTEM**
BICYCLE TRAILER FOR TRANSPORTING PEOPLE, HAVING AT LEAST ONE SEAT DEVICE AND A BELT RESTRAINT SYSTEM
REMORQUE DE BICYCLETTE POUR LE TRANSPORT DE PERSONNES AVEC AU MOINS UN DISPOSITIF DE SIÈGE ET UN SYSTÈME DE RETENUE PAR CEINTURE

(30) Priorität: 07.11.2018 DE 102018127798
(43) Veröffentlichungstag der Anmeldung: 09.09.2020
(73) Patentinhaber: Boldt, Julia, 53773 Hennef (DE)
(72) Erfinder: BOLDT, Nikolai, 53567 Buchholz (DE)
(74) Vertreter: Freischem & Partner Patentanwälte mbB
(86) Internationale Anmeldenummer: PCT/EP2019/077281
(87) Internationale Veröffentlichungsnummer: WO 2020/094321

(56) Entgegenhaltungen:
- EP-A2- 1 398 262
- DE-A1-102007 013 766
- DE-U1- 20 209 601
- US-A- 6 056 306
- US-A1- 2003 067 153

## Beschreibung

Die Erfindung betrifft einen Fahrradanhänger zum Transport von Personen mit mindestens einer Sitzvorrichtung und einem Gurt-Rückhaltesystem gemäß dem Oberbegriff von Anspruch 1.

Aus der Praxis bekannte Fahrradanhänger zum Transport von Personen, insbesondere Kindern, weisen üblicherweise Gurt-Rückhaltesysteme auf, die zwei Schultergurte umfassen, welche mit einem Beingurt verbunden werden, so dass sich ein y-förmiges Rückhaltesystem ergibt. Der Beingurt ist üblicherweise zwischen den beiden Beinen einer zur transportierenden Person hindurchgeführt und stellt zusammen mit den beiden Schultergurten sicher, dass im Falle einer plötzlichen Verzögerung, beispielsweise ausgelöst durch ein Bremsvorgang oder einen Unfall, die zu transportierende Person nicht aus dem Fahrradanhänger herausgeschleudert wird. Zum Spannen sind bei den aus der Praxis bekannten Systemen üblicherweise an den beiden Schultergurten entsprechende Gurt-Spannelemente vorgesehen, die durch Ziehen eines Gurtes in eine Spannrichtung (meist nach unten in Richtung Boden) eine Verkürzung der wirksamen Länge des jeweiligen Schultergurtes bewirken und somit die zu transportierende Person gegenüber der Sitzvorrichtung festspannen. Diese Einstellmöglichkeit ist mit dem Nachteil verbunden, dass jeder einzelne Gurt vor Fahrantritt stets separat festgespannt und nach Fahrtbeendigung wieder gelöst werden muss. Darüber hinaus kann es zu einem Verdrehen oder "Vermengen" der Gurte kommen, wodurch in der Praxis die Länge der Gurte oft nicht optimal an die Größe des Kindes angepasst ist. Dies ist mit dem Risiko verbunden, dass ein oder beide Gurte nicht ausreichend gespannt sind und ein Kind bei einem Unfall mit umkippendem Anhänger mit dem Kopf in Kontakt mit dem Untergrund bzw. mit der Fahrbahn gerät. Das zeitaufwändige und gemäß Stand der Technik umständliche Gurteinstellen und Gurtspannen kann schließlich dazu führen, dass die Anwender die Gurte nicht oder nicht immer ausreichend festspannen. In solchen Fällen ist das Risiko, dass sich ein Kind beim Umkippen oder Überrollen eines Fahrradanhängers erheblich verletzt, deutlich erhöht, weil die Bewegungsfreiheit des Kinders dann häufig größer ist als der verbleibende Abstand bis zum Untergrund bzw. zur Fahrbahn.

Aus EP 1 398 262 A2 ist eine Körperaufnahme für ein fahrbares Rahmengestell nach Art eines Fahrradanhängers bekannt, die aus einer flexiblen Matte besteht, welche zum Transport von Babys oder Kleinkinder durch Spannelemente in die Transportform gebracht werden soll.

Der Erfindung liegt die Aufgabe zu Grunde, einen Fahrradanhänger zum Transport von Personen mit einem verbesserten Gurt-Rückhaltesystem bereitzustellen, wobei insbesondere die Handhabung zur Sicherung von zu transportierenden Personen verbessert und die Sicherheit erhöht werden soll.

Die Lösung der Aufgabe erfolgt erfindungsgemäß mit den Merkmalen des Anspruchs 1. Weitere praktische Ausführungsformen und Vorteile der Erfindung sind in Verbindung mit den abhängigen Ansprüchen beschrieben.

Ein erfindungsgemäßer Fahrradanhänger zum Transport von Personen umfasst mindestens eine Sitzvorrichtung, die zumindest einen Sitzflächenabschnitt und zumindest einen Rücken-Stützabschnitt sowie mindestens ein Gurt-Rückhaltesystem für eine zu transportierende Person umfasst, wobei das Gurt-Rückhaltesystem mindestens zwei Schultergurte aufweist. Dabei ist eine Spannvorrichtung vorgesehen, die derart ausgebildet ist, dass durch Betätigung eines Betätigungselements die mindestens zwei Schultergurte gleichzeitig spannbar sind, wobei das Betätigungselement (42) und/oder ein Spannvorrichtungs-Öffnungselement (54) unterhalb des Sitzflächenabschnitts (12) und/oder rückseitig des Rücken-Stützabschnitts (14) angeordnet ist. Hinsichtlich des Begriffs Sitzvorrichtung wird insbesondere auf Einzelsitze sowie auf Sitzbänke verwiesen, wobei ein Einzelsitz üblicherweise als Sitzflächenabschnitt einen Einzelsitz und als Rücken-Stützabschnitt eine Rückenlehne für eine einzelne Person aufweist. Eine Sitzbank hingegen weist üblicherweise als Sitzflächenabschnitt eine Sitzbank oder zwei Einzelsitze auf, wobei auch als Rückenlehne sowohl zwei einzelne Rückenlehnen als auch eine Rückenlehne für zwei oder mehr Personen vorgesehen sein können. Der Sitzflächenabschnitt und der zumindest eine Rücken-Stützabschnitt können sowohl aus Stoff gebildet sein als auch aus einem formstabilen Werkstoff. Auch eine Zusammensetzung aus Stoff und formstabilen Elementen ist möglich. Üblicherweise wird aus Gewichtsgründen ein hoher Stoffanteil bevorzugt, was mit der zusätzlichen Schwierigkeit verbunden ist, dass von einem Gurt auf Stoffabschnitte wirkende Kräfte eine Auslenkung und/oder elastische Verformung des entsprechenden Stoffabschnittes bewirken. Dies kann insbesondere bei einer Durchführung von Gurten durch Öffnungen in entsprechenden Stoffabschnitten zu unerwünschten Belastungen und/oder Formen des Sitzflächenabschnitts und/oder des Rücken-Stützabschnitts führen. Sowohl hinsichtlich der nachfolgend noch erläuterten Sicherheitsthematik als auch zur Vermeidung von Fehlbedienungen und zur Erzielung einer kompakten Konstruktion ist es vorteilhaft, dass das Betätigungselement und/oder ein Spannvorrichtungs-Öffnungselement unterhalb des Sitzflächenabschnitts und/oder rückseitig des Rücken-Stützabschnitts angeordnet ist. Dadurch kann die Länge der Schultergurte sowie die Länge etwaiger sich zwischen den Schultergurten und dem Betätigungselement erstreckender Verbindungselemente gering gehalten werden, was sowohl hinsichtlich üblicherweise erwünschter geringer Elastizitäten als auch hinsichtlich des Materialbedarfs, des Gewichtes und der Herstellungskosten eines erfindungsgemäßen Fahrradanhängers vorteilhaft ist.

Vorzugsweise ist zumindest der eine Rücken-Stützabschnitt aus Stoff gebildet.

Weiter bevorzugt ist zumindest der Rücken-Stützabschnitt durch ein Stoffmaterial gebildet, welches in dem Fahrradanhänger verspannt ist.

Ein erfindungsgemäßer Fahrradanhänger mit einer wie vorstehend beschriebenen Spannvorrichtung hat den Vorteil, dass das Sichern einer zu transportierenden Person auf einfache Art und Weise durch einfache Betätigung des Betätigungselements erfolgen kann, wobei während der Betätigung gleichzeitig beide Schultergurte spannbar sind. Dadurch wird nicht nur der Komfort einer Bedienperson erhöht, welche ein Kind oder eine sonstige Person, die in dem Fahrradanhänger transportiert werden soll, vor dem Fahrtbeginn sichern möchte. Auch die auf das Kind wirkenden Kräfte entstehen gleichzeitig und gleichmäßig über beide Schultergurte, so dass sich für zu transportierende Personen eine angenehme Haptik während des Spannens ergibt.

In einer praktischen Ausführungsform eines erfindungsgemäßen Fahrradanhängers ist das Betätigungselement und/oder ein Spannvorrichtungs-Öffnungselement in einem für eine zu transportierende Person, die mit dem Rückhaltesystem gesichert ist, nicht zugänglichen Bereich angeordnet. Dies hat den Vorteil, dass Kinder, die mit dem erfindungsgemäßen Fahrradanhänger transportiert werden sollen, nicht versehentlich oder absichtlich eine Sicherung mit dem Rückhaltesystem eines erfindungsgemäßen Fahrradanhängers bewirken oder lösen können.

In einer weiteren praktischen Ausführungsform eines erfindungsgemäßen Fahrradanhängers besteht das Gurt-Rückhaltesystem aus zwei Schultergurten und mindestens einem Beingurt, die zur Sicherung einer zu transportierenden Person miteinander verbindbar sind, wobei die Spannvorrichtung derart ausgebildet ist, dass die Schultergurte nach oben spannbar sind. Unter miteinander verbindbar im vorstehenden Sinne wird sowohl die Möglichkeit verstanden, dass jeder der mindestens zwei Schultergurte einzeln mit dem Beingurt verbindbar ist, als auch die Variante, dass die Schultergurte zunächst miteinander und dann als Einheit mit dem Beingurt verbindbar sind. Entscheidend ist lediglich, dass sich insgesamt eine Verbindung zwischen den Schultergurten und dem Beingurt herstellen lässt, die ein sicheres Rückhalten einer zu transportierenden Person ermöglicht. Ein Verspannen der Schultergurte nach oben hat den Vorteil, dass sich für die zu sichernde Person eine angenehme Haptik ergibt und während des Spannens nach unten wirkende Kräfte auf die Schulter einer zu sichernden Person auftreten, wenn die Schultergurte relativ zu dem Rücken-Stützabschnitt zu niedrig positioniert sind. Darüber hinaus hat ein nach oben Spannen der Schultergurte den Vorteil, dass der Beingurt fest gegenüber der Sitzvorrichtung fixiert sein kann, so dass ein an dem Beingurt vorgesehenes Verbindungselement zur Aufnahme der beiden Schultergurte unabhängig von dem Zustand des Gurt-Rückhaltesystems (geöffnet oder geschlossen) stets an der gleichen Position des Fahrradanhängers verbleiben kann.

In einer weiteren praktischen Ausführungsform eines erfindungsgemäßen Fahrradanhängers ist an den mindestens zwei Schultergurten jeweils ein Kupplungselement angeordnet, das mit mindestens einem, an dem Beingurt vorgesehenen, komplementär ausgebildeten Kupplungselement zusammen wirkt. Alternativ kann ein Schultergurt-Kupplungselement an einem die Schultergurte verbindenden Element vorgesehen sein. Diesbezüglich wird insbesondere auf aus der Praxis bekannte Gurtschlösser verwiesen, bei welchen üblicherweise an den Schultergurten Kupplungselemente in Form von Einsteckelementen vorgesehen sind, die durch Einstecken in ein an dem Beingurt befestigtes Gurtschloss fixierbar sind. Die Verbindung kann üblicherweise durch Betätigung eines an dem Gurtschloss vorgesehenen Öffnungselements wieder gelöst werden.

Insbesondere in Verbindung mit einem Betätigungselement und/oder einem Spannvorrichtungs-Öffnungselement, das unterhalb des Sitzflächenabschnitts angeordnet ist, hat es sich als vorteilhaft erwiesen, wenn die Spannvorrichtung ein zentrales Spannelement aufweist, das unmittelbar oder mittelbar mit den beiden Schultergurten gekoppelt ist. Dies hat den Vorteil, dass die beiden Schultergurte nur bis zu der Verbindungsstelle zwischen dem zentralen Spannelement und den Schultergurten geführt werden kann und von dort aus nur ein Spannelement erforderlich ist. Diesbezüglich wird insbesondere auf die Möglichkeit verwiesen, zur Kupplung des zentralen Spannelements mit den beiden Schultergurten ein Adapterelement einzusetzen. Als ein solches Adapterelement eignet sich insbesondere eine Platte, an welcher unmittelbar die beiden oberseitigen Enden der Schultergurte befestigt sind und mittelbar oder unmittelbar das zentrale Spannelement des Gurt-Rückhaltesystems befestigt ist. In diesem Fall können die Schultergurte parallel oder im Wesentlichen parallel zu ihrer Durchführungsposition durch den Rücken-Stützabschnitt oder der Überführungsposition über den Rücken-Stützabschnitt aufgenommen werden. Das zentrale Spannelement greift vorzugsweise als Einzelelement mittig zwischen den beiden Befestigungspunkten der Schultergurte an dem Adapterelement an, wobei das Spannelement auch mehrere Anbindungspunkte an dem Adapterelement aufweisen kann, vorzugsweise derart, dass sich ein resultierender Kraftangriffspunkt für das zentrale Spannelement mittig zwischen den Anbindungspunkten der Schultergurte ergibt.

In einer weiteren praktischen Ausführungsform eines erfindungsgemäßen Fahrradanhängers ist eine Arretiervorrichtung vorgesehen, mittels welcher die Schultergurte zumindest in einem gespannten Zustand fixierbar sind. Als Arretiervorrichtung eignet sich grundsätzlich jedes Element, das eine bedarfsweise Fixierung der Schultergurte in einer gewünschten SollPosition ermöglicht. Insbesondere wird auf die Möglichkeit verwiesen, als Arretiervorrichtung mindestens ein kraft- und/oder formschlüssig wirkendes Schloss einzusetzen, das auf rückseitig des Rücken-Stützabschnitts oder unterhalb des Sitzflächenabschnitts angeordnete Abschnitte der Schultergurte und/oder auf einen rückseitig des Rücken-Stützabschnitts oder unterhalb des Sitzflächenabschnitts angeordnetes Spannelement wirkt. Diesbezüglich wird als konstruktiv besonders einfache aber zugleich funktionssichere Möglichkeit darauf verwiesen, als Arretiervorrichtung ein Klemmschloss zu verwenden, das - beispielsweise mittels eines federbelasteten Sperrelements - in einem unbetätigten Zustand eine Fixierung der Schultergurte bewirkt und durch Betätigung eines geeigneten Spannvorrichtungs-Öffnungselements die Fixierung der Schultergurte lösbar ist.

In einer weiteren praktischen Ausführungsform, die alternativ oder in Ergänzung vorgesehen sein kann, ist als Spannvorrichtungs-Öffnungselement ein durch Zug, Druck und/oder eine Dreh- oder Schwenkbewegung betätigbares Element vorgesehen. Diesbezüglich wird insbesondere auf einen Greifabschnitt mit einem daran befestigten Gurt verwiesen, der von Hand gezogen werden kann, um das Spannvorrichtungs-Öffnungselement zu betätigen. Ferner wird auf Druckschalter und/oder Schwenkhebel verwiesen, deren Betätigung erforderlich sein kann, um die Fixierung der Schultergurte aktiv und temporär zu lösen, beispielsweise um ein mit dem Gurt-Rückhaltesystem in einem Fahrradanhänger fixiertes Kind aussteigen lassen zu können.

In einer weiteren praktischen Ausführungsform eines erfindungsgemäßen Fahrradanhängers sind der Sitzflächenabschnitt und der Rücken-Stützabschnitt integrale Bestandteile des Fahrradanhängers. Damit ist gemeint, dass diese beispielsweise aus Stoff gebildet und nicht herausnehmbar in dem Fahrradanhänger angeordnet sind, beispielsweise indem der Stoff in dem Fahrradanhänger auf geeignete Art und Weise befestigt ist. Die Befestigung kann insbesondere an Rahmenelementen des Fahrradanhängers realisiert sein.

Weiter bevorzugt ist der Fahrradanhänger derart ausgebildet, dass er in eine kompakte Transportform zusammenklappbar ist. Insbesondere wird in diesem Zusammenhang auf eine vorteilhafte Gestaltung des Sitzflächenabschnitts und des Rücken-Stützabschnitts verwiesen, welche eine Relativbeweglichkeit zwischen Sitzflächenabschnitt und Rücken-Stützabschnitt ermöglicht, beispielsweise um diese für die Zusammenklappbarkeit des Fahrradanhängers in die kompakte Transportform zu nutzen, indem beim Zusammenklappen des Fahrradanhängers eins Relativbewegung zwischen Rücken-Stützabschnitt und Sitzflächenabschnitt ermöglicht wird.

Weitere praktische Ausführungsformen und Vorteile der Erfindung sind nachfolgend im Zusammenhang mit den Zeichnungen beschrieben. Es zeigen:
- Fig. 1: eine Darstellung eines Ausführungsbeispiels nur einer Sitzvorrichtung eines erfindungsgemäßen Fahrradanhängers in einer isometrischen Ansicht von schräg vorne und von oben,
- Fig. 2: die Sitzvorrichtung aus Fig. 1 in einer Ansicht von vorne,
- Fig. 3: die Sitzvorrichtung aus den Fig. 1 und 2 in einer isometrischen Ansicht von schräg hinten und von unten,
- Fig. 4: die Sitzvorrichtung aus den Fig. 1 bis 3 in einer Ansicht von hinten,
- Fig. 5: die Sitzvorrichtung aus den Fig. 1 bis 4 in einer Seitenansicht,
- Fig. 6: die Sitzvorrichtung aus den Fig. 1 bis 5 in einer Ansicht von vorne, wobei ein Schultergurt entfernt wurde,
- Fig. 7: eine Darstellung eines weiteren Ausführungsbeispiels nur einer Sitzvorrichtung eines erfindungsgemäßen Fahrradanhängers in einer isometrischen Ansicht von schräg hinten und von unten,
- Fig. 8: die Sitzvorrichtung aus Fig. 7 in einer Ansicht von hinten und
- Fig. 9: die Sitzvorrichtung aus den Fig. 7 und 8 in einer Seitenansicht.

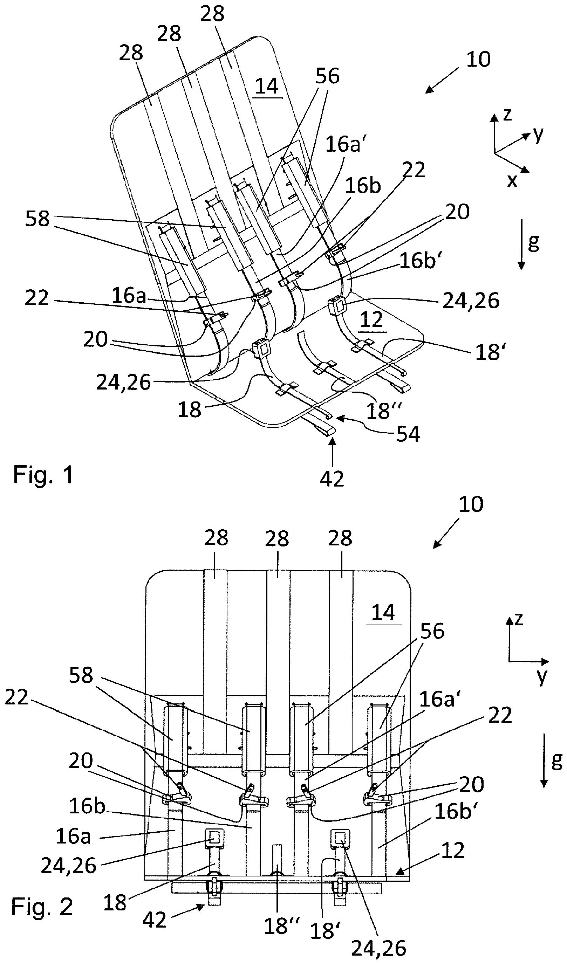

In den Figuren 1 bis 6 ist ein nicht beschränkendes Ausführungsbeispiel einer Sitzvorrichtung 10 gezeigt, die zur Installation in einem nicht dargestellten Fahrradanhänger vorgesehen ist. Mit den Pfeilen des jeweiligen x-y-z-Koordinatensystems sind die Fahrzeuglängsrichtung (x-Richtung), die Fahrzeugquerrichtung (y-Richtung) und die Fahrzeughochrichtung (z-Richtung) gekennzeichnet, wobei der Pfeil der x-Richtung in Fahrtrichtung weist und der Pfeil der z-Richtung entgegen der Gravitationskraft g nach oben weist.
Die Sitzvorrichtung 10 ist gebildet durch einen überwiegend horizontal ausgerichteten Sitzflächenabschnitt 12 und einen sich überwiegend in vertikaler Richtung erstreckenden Rücken-Stützabschnitt 14. Der Sitzflächenabschnitt 12 und Rücken-Stützabschnitt 14 sind in der gezeigten Ausführungsform durch ein Stoffmaterial gebildet, welches in dem Fahrradanhänger verspannt ist. Dies ist aus der vereinfachten Darstellung in den Figuren 1 bis 6 nicht erkennbar. Es ist auch nicht zwingend erforderlich, dass der Sitzflächenabschnitt 12 und der Rücken-Stützabschnitt 14 aus einem verspannten Stoffmaterial gebildet ist. Für den Sitzflächenabschnitt 12 und/oder den Rücken-Stützabschnitt 14 können auch beliebige andere Werkstoffe verwendet werden, insbesondere formstabile Elemente, beispielsweise aus einem Kunststoffmaterial.

Das in Figuren 1 bis 6 gezeigte Ausführungsbeispiel zeigt als Sitzflächenabschnitt 12 eine Sitzbank, auf welcher zwei Kinder nebeneinander transportierbar sind. Für den Fall, dass zwei Kinder zu transportieren sind, werden für das in Fahrrichtung rechts sitzende Kind die beiden Schultergurte 16a, 16b und der Beingurt 18 verwendet. Für das in Fahrrichtung links sitzende Kind sind zwei Schultergurte 16 a', 16b' vorgesehen, die gemeinsam mit dem Beingurt 18' verwendet werden können.

Als Schultergurt-Kupplungselement 20 ist an jedem Schultergurt 16a, 16b, 16a', 16b' ein Einsteckelement 22 befestigt. Die Schultergurt-Kupplungselemente 20 sind dazu vorgesehen, mit an den Enden der Beingurte 18, 18' vorgesehenen Beingurt-Kupplungselemente 24 in Form von Gurtschlössern 26 zusammenzuwirken.

Für den Fall, dass nur ein Kind in einem Fahrradanhänger mit der in den Figuren 1 bis 6 gezeigten Sitzvorrichtung 10 transportiert werden soll, können die mittleren Schultergurte 16b, 16a' zusammen mit einem mittleren Beingurt 18" verwendet werden, der nur exemplarisch ohne ein entsprechendes Gurtschloss dargestellt ist.

Wie in den Figuren 1, 2 und 6 gut erkennbar ist, sind im oberen Teil des Rücken-Stützabschnitts 14 optionale Klettverschluss-Streifen 28 vorgesehen, die für eine Klettverschluss-Befestigung geeigneter Kopfstützen in einer gewünschten Höhe dienen.

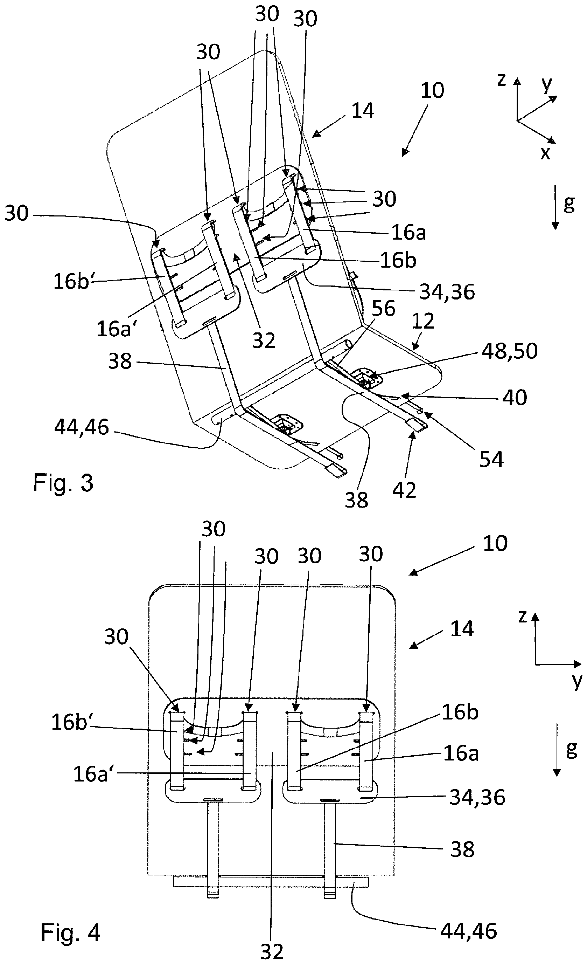

Die Funktionsweise der Sitzvorrichtung 10 wird im Folgenden anhand der in Fahrtrichtung rechts dargestellten Sitzposition mit den Schultergurten 16a, 16b und dem Beingurt 18 erläutert. Wie sich aus einer Zusammenschau insbesondere der Figuren 1, 3 und 5 ergibt, sind die Schultergurte 16a, 16b in der dargestellten Konfiguration durch obere Schlitze 30 des Rücken-Stützabschnitts 14 in einen rückseitigen Bereich des Rücken-Stützabschnitts 14 geführt. Diese Schlitze 30 sind nicht nur in dem aus Stoff gebildeten Rücken-Stützabschnitt 14 vorgesehen, sondern auch in einer rückseitig daran befestigten Stützplatte 32. Diese optionale Stützplatte 32 kann insbesondere dann entfallen, wenn der Rücken-Stützabschnitt 14 nicht aus einem flexiblen Stoff gebildet ist, sondern durch ein im Wesentlichen formstabiles Element. Wie in Figur 3 gut ersichtlich ist, sind die Schultergurte 16a, 16b rückseitig entlang des Rücken-Stützabschnitts 14 entlang nach unten geführt und an einem Adapterelement 34 in Form einer Platte 36 befestigt.

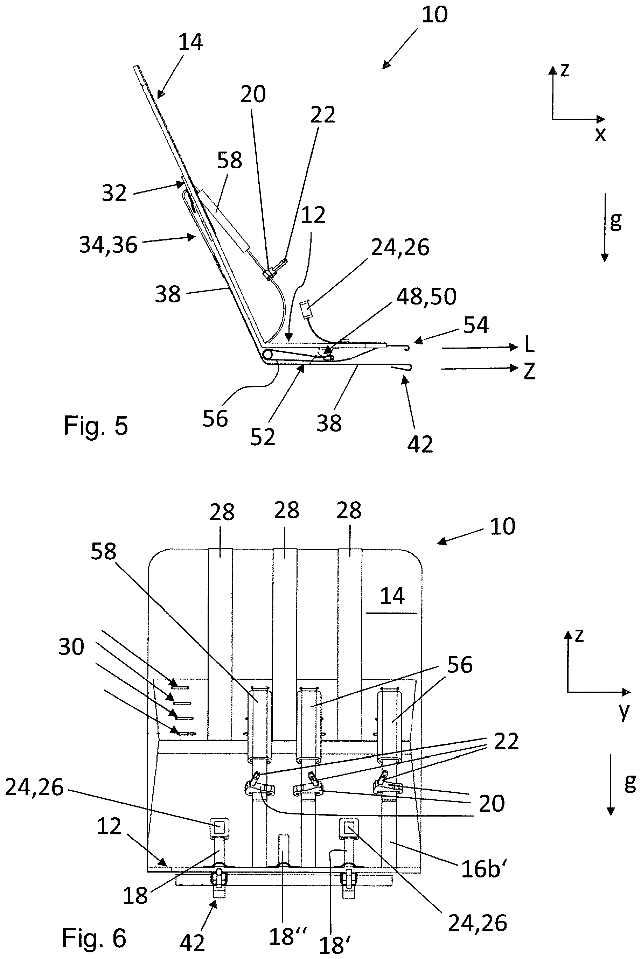

Wie aus Fig. 6 gut ersichtlich ist, sind mehrere Schlitze 30 übereinander vorgesehen, hier insgesamt vier Schlitze in ungefähr gleichem Abstand zueinander. Die Schlitze 30 sind ferner derart angeordnet, dass diese relativ zu dem jeweils dazugehörten Beingurt 18, 18' von unten nach oben betrachtet jeweils etwas weiter nach außen versetzt sind. Damit wird der Tatsache Rechnung getragen, dass sich die Breite der Schultern der Kinder mit zunehmender Körpergröße eines zu transportierenden Kindes ebenfalls vergrößert. Die Schultergurte 16a, 16b können wahlweise durch einen geeigneten Schlitz 30 nach hinten geführt werden, indem diese rückseitig von dem Adapterelement 34 gelöst werden.

Mittig zwischen den beiden Befestigungsbereichen der Schultergurte 16a, 16b ist ein Spannelement 38 befestigt, das Teil einer Spannvorrichtung 40 mit einem Betätigungselement 42 ist. In der gezeigten Ausführungsform ist als Spannelement 38 ein Gurt vorgesehen, der rückseitig des Rücken-Stützabschnitts 14 bis zu einem Umlenkelement 44 und dann in Fahrzeuglängsrichtung nach vorne unterhalb des Sitzflächenabschnitts 12 geführt ist. Als Umlenkelement 44 ist in der gezeigten Ausführungsform eine zylindrische Stange 46 vorgesehen, die sich nahezu über die gesamte Breite des Sitzflächenabschnitts 12 erstreckt.

Wie in Figur 3 am besten erkennbar ist, ist unterseitig des Sitzflächenabschnitts 12 als Arretiervorrichtung 48 ein Schloss 50 angeordnet. Das Schloss 50 umfasst ein Fixierelement 52, durch welches das Spannelement 38 hindurchgeführt ist. Bei dem Fixierelement 52 handelt es sich in der gezeigten Ausführungsform um ein kraftschlüssig wirkendes Fixierelement, das in nicht aktivierter Stellung des Schlosses 50 das Spannelement 38 und damit auch die Schultergurte 16a, 16b fixiert. Durch Ziehen an dem Betätigungselement 42 in Richtung des Pfeiles z und/oder durch Ziehen an einem Spannvorrichtungs-Öffnungselement 54 in Richtung des Pfeiles L kann das als Arretiervorrichtung 48 dienende Schloss 50 geöffnet werden, um die Relativposition der Schultergurte 16a, 16b zu verändern, insbesondere um die Schultergurte 16a, 16b zu spannen oder zu lösen. In der gezeigten Ausführungsform sind sowohl das Betätigungselement 42 als auch das Spannvorrichtung-Öffnungselement 54 mit einem Finger oder einer ganzen Hand greifbare Schlaufen. Die Figur 5 dargestellte, gegenüber der Vorderkante des Sitzflächenabschnitts 12 in Fahrtrichtung nach vorne herausragende Position dient nur der Visualisierung der Position des Betätigungselements 42 bzw. des Spannvorrichtungs-Öffnungselements 54 im jeweils betätigten Zustand. Im nicht betätigten Zustand befinden sich das Betätigungselement 42 und das Spannvorrichtungs-Öffnungselement 54 vorzugsweise unterhalb des Sitzflächenabschnitts 12 in einer Lage, die für ein auf dem Sitzflächenabschnitt 12 sitzendes Kind, das mit dem nicht dargestellten Fahrradanhänger transportiert werden soll, nicht zugänglich ist. Dies hat den Vorteil, dass es für ein Kind nicht möglich ist, das Rückhaltesystem beim Spielen oder Ausprobieren von einzelnen Elementen in dem Fahrradanhänger versehentlich durch ein zu transportierendes Kind geöffnet wird.

Der Vollständigkeit halber wird darauf verwiesen, dass die gleiche Sicherheit auch dadurch erzielt werden kann, dass die in Richtung der Pfeile L bzw. Z wirkenden Kräfte so groß ausgelegt werden, dass ein bestimmungsgemäß mit dem nicht dargestellten Fahrradanhänger transportiertes Kind diese Kraft nicht aufbringen kann. In diesem Fall können das Betätigungselement 42 und/oder das Spannvorrichtung-Öffnungselement 54 auch in einem Bereich angeordnet sein, der für ein auf dem Sitzflächenabschnitt 12 sitzendes Kind zugänglich ist.

Der Vollständigkeit halber wird noch darauf verwiesen, dass die Betätigung des als Arretiervorrichtung 48 dienenden Schlossen 50 in der gezeigten Ausführungsform mittels eines von dem Spannvorrichtungs-Öffnungselement 54 über das Umlenkelement 44 geführten Zugelements 56 erfolgt, das fest mit dem Schloss 50 verbunden ist.

An sämtlichen Schultergurten 16a, 16b, 16a', 16b' sind Schulterpolster 58 befestigt, um die von den Schultergurten 16a, 16b, 16a', 16b' auf ein zu transportierendes Kind wirkenden Kräfte möglichst großflächig aufzubringen und somit den haptischen Komfort zu erhöhen.

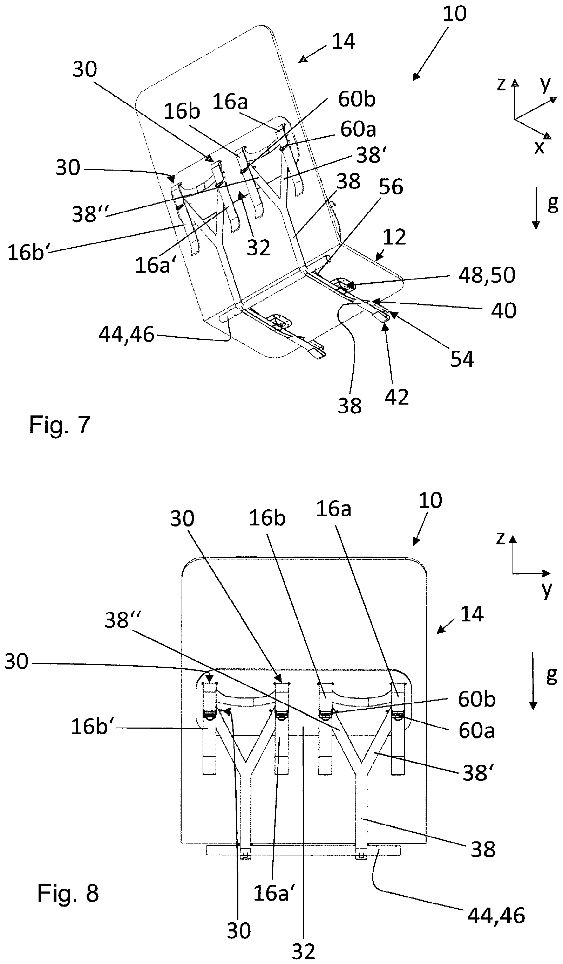

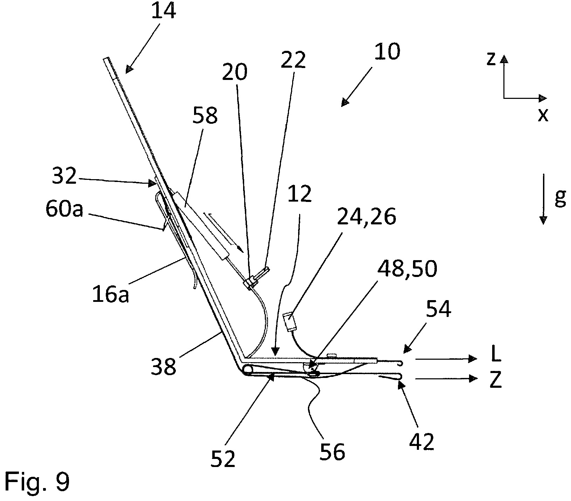

Die Fig. 7 bis 9 zeigen eine weitere Ausführungsform einer Sitzvorrichtung eines erfindungsgemäßen Fahrradanhängers. Für identische oder zumindest funktionsgleiche Elemente wie bei der ersten Ausführungsform werden im Folgenden die gleichen Bezugszeichen verwendet.

Die in den Fig. 7 bis 9 dargestellte Ausführungsform unterscheidet sich im Wesentlichen dadurch von der in den Fig. 1 bis 6 dargestellten Ausführungsform, dass die Schultergurte 16a, 16b jeweils über ein Verbindungselement 60a, 60b unmittelbar mit dem Spannelement 38 verbunden sind. Das Spannelement 38 weist dazu zwei oberseitig y-förmig auslaufende Enden 38', 38" auf. Die Verbindungselemente 60a, 60b ermöglichen es, die Länge der Schultergurte 16a, 16b, welche vorderseitig maximal verfügbar ist, an die jeweiligen Bedürfnisse und insbesondere die Statur eines mit dem Gurt zu sichernden Kindes anzupassen.

In einer nicht dargestellten weiter verbesserten Ausführungsform, sind die Verbindungselemente 60a, 60b derart zwangsgekoppelt, dass sich diese nur derart parallel verstellen lassen, dass die wirksame Länge auf beiden Seiten stets gleich groß ist.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

Insbesondere wird darauf verwiesen, dass anstelle der für das Betätigungselement 42 und/oder das Spannvorrichtungs-Öffnungselement 54 in den Figuren 1 bis 9 gezeigten Ausführungsbeispiele vorgesehenen Schlaufen, die in Richtung der Pfeile Z bzw. L gezogen werden müssen, auch andere Betätigungselemente vorgesehen sein können, insbesondere auch durch aufzubringende Druckkräfte, Drehbewegungen und/oder Schwenkbewegungen betätigbare Elemente. Diesbezüglich wird insbesondere auf Druckstangen, Schwenkhebel sowie Drehgriffe verwiesen, die mit geeigneten Spannvorrichtungen und/oder Arretiervorrichtungen zusammen wirken können. Diesbezüglich obliegt es dem Fachmann, eine geeignete Kombination aus Betätigungselement und Spannvorrichtung bzw. Arretiervorrichtung auszuwählen.

### Bezugszeichenliste

- 10: Sitzvorrichtung
- 12: Sitzflächenabschnitt
- 14: Rücken-Stützabschnitt
- 16a: Schultergurt
- 16b: Schultergurt
- 16a': Schultergurt
- 16b': Schultergurt
- 18: Beingurt
- 18': Beingurt
- 18": Beingurt
- 20: Schultergurt-Kupplungselement
- 22: Einsteckelement
- 24: Beingurt-Kupplungselement
- 26: Gurtschloss
- 28: Klettverschluss-Streifen
- 30: Schlitze
- 32: Stützplatte
- 34: Adapterelement
- 36: Platte
- 38: Spannelement
- 40: Spannvorrichtung
- 42: Betätigungselement
- 44: Umlenkelement
- 46: Stange
- 48: Arretiervorrichtung
- 50: Schloss
- 52: Fixierelement
- 54: Spannvorrichtung-Öffnungselement
- 56: Zugelement
- 58: Schulterpolster
- 60a: Verbindungselement
- 60b: Verbindungselement

## Patentansprüche

1. Fahrradanhänger zum Transport von Personen mit mindestens einer Sitzvorrichtung (10), die zumindest einen Sitzflächenabschnitt (12) und zumindest einen Rücken-Stützabschnitt (14) sowie mindestens ein Gurt-Rückhaltesystem für eine zu transportierende Person umfasst, wobei das Gurt-Rückhaltesystem mindestens zwei Schultergurte (16a, 16b, 16a', 16b') aufweist,
**dadurch gekennzeichnet,**
**dass** eine Spannvorrichtung (40) vorgesehen ist, die derart ausgebildet ist, dass durch Betätigung eines Betätigungselements (42) die mindestens zwei Schultergurte (16a, 16b, 16a', 16b') gleichzeitig spannbar sind, wobei das Betätigungselement (42) und/oder ein Spannvorrichtungs-Öffnungselement (54) unterhalb des Sitzflächenabschnitts (12) und/oder rückseitig des Rücken-Stützabschnitts (14) angeordnet ist.

2. Fahrradanhänger nach dem vorstehenden Anspruch, **dadurch gekennzeichnet, dass** zumindest der eine Rücken-Stützabschnitt aus Stoff gebildet ist.

3. Fahrradanhänger nach einem der vorstehenden Ansprüche, **dadurch gekennzeichnet, dass** zumindest der Rücken-Stützabschnitt durch ein Stoffmaterial gebildet, welches in dem Fahrradanhänger verspannt ist.

4. Fahrradanhänger nach einem der vorstehenden Ansprüche, **dadurch gekennzeichnet, dass** das Betätigungselement (42) und/oder ein Spannvorrichtungs-Öffnungselement (54) in einem für eine zu transportierende Person, die mit dem Rückhaltesystem gesichert ist, nicht zugänglichen Bereich angeordnet ist.

5. Fahrradanhänger nach einem der vorstehenden Ansprüche, **dadurch gekennzeichnet, dass** das Gurt-Rückhaltesystem aus zwei Schultergurten (16a, 16b, 16a', 16b') und mindestens einem Beingurt (18, 18', 18") besteht, die zur Sicherung einer zu transportierenden Person miteinander verbindbar sind, wobei die Spannvorrichtung (40) derart ausgebildet ist, dass die Schultergurte (16a, 16b, 16a', 16b') nach oben spannbar sind.

6. Fahrradanhänger nach dem vorstehenden Anspruch, **dadurch gekennzeichnet, dass** an den mindestens zwei Schultergurten (16a, 16b, 16a', 16b') jeweils ein Schultergurt-Kupplungselement (20) angeordnet ist oder ein Schultergurt-Kupplungselement an einem die Schultergurte verbindenden Element vorgesehen ist, das mit mindestens einem, an dem Beingurt (18, 18', 18") vorgesehenen, komplementär ausgebildeten Beingurt-Kupplungselement (24) zusammenwirkt.

7. Fahrradanhänger nach einem der vorstehenden Ansprüche, **dadurch gekennzeichnet, dass** die Spannvorrichtung (40) ein zentrales Spannelement (38) aufweist, das unmittelbar oder mittelbar mit den beiden Schultergurten (16a, 16b, 16a', 16b') gekoppelt ist.

8. Fahrradanhänger nach dem vorstehenden Anspruch, **dadurch gekennzeichnet, dass** zur Kopplung des zentralen Spannelements (38) mit den beiden Schultergurten (16a, 16b, 16a', 16b') ein Adapterelement (34) vorgesehen ist.

9. Fahrradanhänger nach dem vorstehenden Anspruch, **dadurch gekennzeichnet, dass** als Adapterelement (34) eine rückseitig an einem aus Stoff gebildeten Rücken-Stützabschnitt (14) befestigte Stützplatte (32) vorgesehen ist.

10. Fahrradanhänger nach dem vorstehenden Anspruch, **dadurch gekennzeichnet, dass** die Schultergurte (16a, 16b, 16a', 16b') durch Schlitze (30) geführt sind, die sowohl in dem aus Stoff gebildeten Rücken-Stützabschnitt (14) als auch in der Stützplatte (32) vorgesehen sind.

11. Fahrradanhänger nach einem der vorstehenden Ansprüche, **dadurch gekennzeichnet, dass** eine Arretiervorrichtung (48) vorgesehen ist, mittels welcher die Schultergurte (16a,16b,16a',16b') zumindest in einem gespannten Zustand fixierbar sind.

12. Fahrradanhänger nach dem vorstehenden Anspruch, **dadurch gekennzeichnet, dass** die Arretiervorrichtung (48) mindestens ein kraft- und/oder formschlüssig wirkendes Schloss (50) aufweist, das auf rückseitig des Rücken-Stützabschnitts (14) oder unterhalb des Sitzflächenabschnitts (12) angeordnete Abschnitte der Schultergurte (16a, 16b, 16a', 16b') und/oder auf einen rückseitig des Rücken-Stützabschnitts (14) oder unterhalb des Sitzflächenabschnitts (12) angeordnetes Spannelement (38) wirkt.

13. Fahrradanhänger nach einem der beiden vorstehenden Ansprüche, **dadurch gekennzeichnet, dass** die Arretiervorrichtung (48) ein Klemmschloss ist und/oder als Spannvorrichtungs-Öffnungselement (54) ein die Fixierwirkung der Arretiervorrichtung (48) durch Zug, Druck und/oder eine Dreh- oder Schwenkbewegung betätigbares Element vorgesehen ist.

14. Fahrradanhänger nach einem der vorstehenden Ansprüche, **dadurch gekennzeichnet, dass** der Sitzflächenabschnitt (12) und der Rücken-Stützabschnitt (14) integrale Bestandteile des Fahrradanhängers sind.

## Claims

1. A bicycle trailer for transporting people having at least one seat device (10) that comprises at least one seat surface section (12) and at least one back support section (14) and at least one belt restraint system for a person to be transported, wherein the belt restraint system has at least two shoulder straps (16a, 16b, 16a', 16b'),
**characterised in that**
a tensioning device (40) is provided which is designed such that the at least two shoulder straps (16a, 16b, 16a', 16b') can be tensioned at the same time by actuating an actuating element (42), wherein the actuating element (42) and/or a tensioning device opening element (54) are arranged below the seat surface section (12) and/or on the back of the back support section (14).

2. The bicycle trailer according to the preceding claim, **characterised in that** at least one of the back support sections is formed of fabric.

3. The bicycle trailer according to any one of the preceding claims, **characterised in that** at least the back support section is formed by a fabric material that is tensioned in the bicycle trailer.

4. The bicycle trailer according to any one of the preceding claims, **characterised in that** the actuating element (42) and/or a tensioning device opening element (54) are arranged in an area inaccessible to a person to be transported that is secured by the restraint system.

5. The bicycle trailer according to any one of the preceding claims, **characterised in that** the belt restraint system consists of two shoulder straps (16a, 16b, 16a', 16b') and at least one leg strap (18, 18', 18") that are connectable to each other for securing a person to be transported, wherein the tensioning device (40) is designed such that the shoulder straps (16a, 16b, 16a', 16b') can be tensioned upwards.

6. The bicycle trailer according to the preceding claim, **characterised in that** a shoulder strap coupling element (20) is respectively arranged at the at least two shoulder straps (16a, 16b, 16a', 16b') or a shoulder strap coupling element is provided at an element connecting the shoulder straps that co-operates with at least one complementarily shaped leg strap coupling element (24) provided at the leg strap (18, 18', 18").

7. The bicycle trailer according to any one of the preceding claims, **characterised in that** the tensioning device (40) has a central tensioning element (38) that is indirectly or directly coupled to the two shoulder straps (16a, 16b, 16a', 16b').

8. The bicycle trailer according to the preceding claim, **characterised in that** an adapter element (34) is provided for coupling the central tensioning element (38) to the two shoulder straps (16a, 16b, 16a', 16b').

9. The bicycle trailer according to the preceding claim, **characterised in that** a support plate (32) fastened to the back of a back support section (14) formed of fabric is provided as the adapter element (34).

10. The bicycle trailer according to the preceding claim, **characterised in that** the shoulder straps (16a, 16b, 16a', 16b') pass through slots (30) that are provided both in the back support section (14) formed of fabric and in the support plate (32).

11. The bicycle trailer according to any one of the preceding claims, **characterised in that** a locking device (48) is provided by which the shoulder straps (16a, 16b, 16a ', 16b') can be fixed at least in a tensioned state.

12. The bicycle trailer according to the preceding claim, **characterised in that** the locking device (48) has at least one non-positively or positively acting lock (50) that acts on portions of the shoulder straps (16a, 16b, 16a', 16b') arranged on the back of the back support section (14) or below the seat surface section (12) and/or on a tensioning element (38) arranged on the rear of the back support section (14) or below the seat surface section (12).

13. The bicycle trailer according to any one of the two preceding claims, **characterised in that** the locking device (48) is a clamping lock and/or an element that can actuate the fixing action of the locking device (48) by pulling, pushing and/or a rotating or pivoting movement is provided as the tensioning device opening element (54).

14. The bicycle trailer according to any one of the preceding claims, **characterised in that** the seat surface section (12) and the back support section (14) are integral components of the bicycle trailer.

## Revendications

1. Remorque de bicyclette pour le transport de personnes, comprenant au moins un dispositif de siège (10) qui comprend au moins une portion de surface d'assise (12) et au moins une portion de dossier (14) et au moins un système de retenue par sangle pour une personne à transporter, dans laquelle le système de retenue par sangle comprenant au moins deux bretelles (16a, 16b, 16a', 16b'),
**caractérisée en ce que**
un dispositif tendeur (40) est prévu, qui est conçu de telle sorte que les au moins deux bretelles (16a, 16b, 16a', 16b') peuvent être tendues simultanément par actionnement d'un élément d'actionnement (42), dans laquelle l'élément d'actionnement (42) et/ou un élément d'ouverture de dispositif tendeur (54) est agencé au-dessous de la portion de surface d'assise (12) et/ou sur le côté arrière de la portion de dossier (14).

2. Remorque de bicyclette selon la revendication précédente, **caractérisée en ce qu'**au moins la portion de dossier est formée d'un tissu.

3. Remorque de bicyclette selon l'une quelconque des revendications précédentes, **caractérisée en ce qu'**au moins la portion de dossier est formée par un matériau textile qui est tendu dans la remorque de bicyclette.

4. Remorque de bicyclette selon l'une quelconque des revendications précédentes, **caractérisée en ce que** l'élément d'actionnement (42) et/ou un élément d'ouverture de dispositif tendeur (54) est disposé dans une zone qui n'est pas accessible pour une personne à transporter qui est sécurisée par le système de retenue.

5. Remorque de bicyclette selon l'une quelconque des revendications précédentes, **caractérisée en ce que** le système de retenue par sangle est constitué de deux bretelles (16a, 16b, 16a', 16b') et d'au moins une sangle de jambe (18, 18', 18") qui peuvent être reliées les unes aux autres pour sécuriser une personne à transporter, le dispositif tendeur (40) étant conçu de telle sorte que les bretelles (16a, 16b, 16a', 16b') peuvent être tendues vers le haut.

6. Remorque de bicyclette selon la revendication précédente, **caractérisée en ce qu'**un élément de couplage de bretelle (20) est disposé sur chacune des au moins deux bretelles (16a, 16b, 16a', 16b') ou un élément de couplage de bretelle est prévu sur un élément reliant les bretelles, lequel élément coopère avec au moins un élément de couplage de sangle de jambe (24) réalisé de manière complémentaire et prévu sur la sangle de jambe (18, 18', 18") .

7. Remorque de bicyclette selon l'une quelconque des revendications précédentes, **caractérisée en ce que** le dispositif tendeur (40) présente un élément tendeur central (38) qui est couplé directement ou indirectement aux deux bretelles (16a, 16b, 16a', 16b').

8. Remorque de bicyclette selon la revendication précédente, **caractérisée en ce qu'**un élément adaptateur (34) est prévu pour coupler l'élément tendeur central (38) aux deux bretelles (16a, 16b, 16a', 16b').

9. Remorque de bicyclette selon la revendication précédente, **caractérisée en ce qu'**une plaque d'appui (32) est prévue en tant qu'élément adaptateur (34) sur le côté arrière d'une portion de dossier (14) réalisée en tissu.

10. Remorque de bicyclette selon la revendication précédente, **caractérisée en ce que** les bretelles (16a, 16b, 16a', 16b') sont guidées à travers des fentes (30) prévues à la fois dans la portion de dossier (14) en tissu et dans la plaque d'appui (32).

11. Remorque de bicyclette selon l'une quelconque des revendications précédentes, **caractérisée en ce qu'**un dispositif de verrouillage (48) est prévu, au moyen duquel les bretelles (16a, 16b, 16a', 16b') peuvent être fixées au moins dans un état tendu.

12. Remorque de bicyclette selon la revendication précédente, **caractérisée en ce que** le dispositif de verrouillage (48) présente au moins un verrouillage par force et/ou à complémentarité de forme (50) qui agit sur des portions des bretelles (16a, 16b, 16a', 16b') disposées sur le côté arrière de la portion de dossier (14) ou au-dessous de la portion de surface d'assise (12) et/ou sur un élément tendeur (38) disposé sur le côté arrière de la portion de dossier (14) ou au-dessous de la portion de surface d'assise (12).

13. Remorque de bicyclette selon l'une quelconque des revendications précédentes, **caractérisée en ce que** le dispositif de verrouillage (48) est une serrure de serrage et/ou qu'un élément pouvant être actionné par un mouvement de traction, de poussée et/ou de rotation ou de pivotement est prévu en tant qu'élément d'ouverture de dispositif tendeur (54).

14. Remorque de bicyclette selon l'une quelconque des revendications précédentes, **caractérisée en ce que** la portion de surface d'assise (12) et la portion de dossier (14) font partie intégrante de la remorque de bicyclette.
